# EUROPEAN PATENT APPLICATION

(11) **EP 2 703 462 A1**
(43) Date of publication of application: **05.03.2014**
(21) Application number: 12777546.8
(22) Date of filing: 03.04.2012
(51) Int. Cl.: C09J 7/00, C09J 7/02, C09J 109/06, C09J 121/00, C09J 123/00, C09J 133/00, C09J 153/00

(54) **ADHESIVE SHEET**

(30) Priority: 27.04.2011 JP 2011099551
(71) Applicant: Nitto Denko Corporation, Ibaraki-shi, Osaka 567-8680 (JP)
(72) Inventor: TAKEDA, Kohei, Ibaraki-shi Osaka 567-8680 (JP); IKISHIMA, Shinsuke, Ibaraki-shi Osaka 567-8680 (JP); KATOU, Yuuki, Ibaraki-shi Osaka 567-8680 (JP)
(74) Representative: Müller-Boré & Partner Patentanwälte PartG mbB
(86) International application number: PCT/JP2012/059022
(87) International publication number: WO 2012/147464

(57) **Abstract**

Provided is a pressure-sensitive adhesive sheet formed of at least two layers, including a rubber-based pressure-sensitive adhesive layer (A) and an acrylic pressure-sensitive adhesive layer (B) that are directly laminated, in which the pressure-sensitive adhesive sheet has a large interlayer peel strength. The pressure-sensitive adhesive sheet is a pressure-sensitive adhesive sheet formed of at least two layers, including a rubber-based pressure-sensitive adhesive layer (A) and an acrylic pressure-sensitive adhesive layer (B) that are directly laminated, in which the pressure-sensitive adhesive sheet has an interlayer peel strength upon peeling of the acrylic pressure-sensitive adhesive layer (B) from the rubber-based pressure-sensitive adhesive layer (A) under conditions of a measurement temperature of 23°C, a tension speed of 0.3 m/min, and a peel angle of 180°C of 2.0 N/20 mm or more.

## Description

### Technical Field

The present invention relates to a pressure-sensitive adhesive sheet, and more specifically, to a pressure-sensitive adhesive sheet formed of at least two layers, including a rubber-based pressure-sensitive adhesive layer (A) and an acrylic pressure-sensitive adhesive layer (B) that are directly laminated, in which the pressure-sensitive adhesive sheet has a large interlayer peel strength.

### Background Art

An acrylic polymer is excellent in light fastness and transparency, and functions suitable for various applications can be imparted to the acrylic polymer depending on a combination of raw materials for synthesizing the polymer. Accordingly, the acrylic polymer has been preferably used in a pressure-sensitive adhesive layer for a pressure-sensitive adhesive sheet.

For example, the following thermoplastic acrylic pressure-sensitive adhesive has been proposed (see, for example, Patent Literatures 1 to 3). The pressure-sensitive adhesive is obtained by precisely polymerizing a block copolymer of an acrylic acid ester as a soft segment and a methacrylic acid ester as a hard segment by a living polymerization method, and has excellent characteristics in terms of various aspects such as heat resistance, weatherability, flexibility, transparency, and pressure-sensitive adhesive property.

On the other hand, a pressure-sensitive adhesive sheet having on both surfaces thereof pressure-sensitive adhesive layers having different polarities can be used in various applications because the sheet allows adherends having different polarities to be attached together. In particular, a pressure-sensitive adhesive sheet having on both surfaces thereof an acrylic pressure-sensitive adhesive layer and a rubber-based pressure-sensitive adhesive layer has quite different polarities on both the surfaces, and hence its construction is effective for attaching adherends having different polarities together (see Patent Literatures 4 to 6).

However, the acrylic pressure-sensitive adhesive layer and the rubber-based pressure-sensitive adhesive layer are poor in interlayer adhesiveness to each other. Therefore, in the pressure-sensitive adhesive sheet having on both surfaces thereof the conventional acrylic pressure-sensitive adhesive layer and rubber-based pressure-sensitive adhesive layer, a base material layer is provided between both the layers (see Patent Literatures 4 and 5), or an adhesive layer is provided between both the layers (see Patent Literature 6). Consequently, the pressure-sensitive adhesive sheet having on both surfaces thereof the conventional acrylic pressure-sensitive adhesive layer and rubber-based pressure-sensitive adhesive layer has a problem in that sufficient thinning thereof cannot be performed.

### Citation List

### Patent Literature

[PTL 1] JP 2001-234146 A
[PTL 2] JP 2002-97238 A
[PTL 3] JP 11-323072 A
[PTL 4] JP 05-37941 Y
[PTL 5] JP 2008-222895 A
[PTL 6] JP 2011-1200 A

### Summary of Invention

### Technical Problem

The present invention has been made to solve the conventional problem, and an object thereof is to provide a pressure-sensitive adhesive sheet formed of at least two layers, including a rubber-based pressure-sensitive adhesive layer (A) and an acrylic pressure-sensitive adhesive layer (B) that are directly laminated, in which the pressure-sensitive adhesive sheet has a large interlayer peel strength.

### Solution to Problem

A pressure-sensitive adhesive sheet of the present invention is a pressure-sensitive adhesive sheet formed of at least two layers, including a rubber-based pressure-sensitive adhesive layer (A) and an acrylic pressure-sensitive adhesive layer (B) that are directly laminated, in which the pressure-sensitive adhesive sheet has an interlayer peel strength upon peeling of the acrylic pressure-sensitive adhesive layer (B) from the rubber-based pressure-sensitive adhesive layer (A) under conditions of a measurement temperature of 23°C, a tension speed of 0.3 m/min, and a peel angle of 180°C of 2.0 N/20 mm or more.

In a preferred embodiment, the rubber-based pressure-sensitive adhesive layer (A) contains at least one kind selected from an α-olefin-based thermoplastic elastomer and a styrene-based thermoplastic elastomer.

In a preferred embodiment, the acrylic pressure-sensitive adhesive layer (B) contains an acrylic block copolymer containing an acrylic acid ester block structure and a methacrylic acid ester block structure.

In a preferred embodiment, the acrylic block copolymer has a weight-average molecular weight of 30,000 to 300,000.

In a preferred embodiment, the pressure-sensitive adhesive sheet of the present invention is a laminate including a laminated structure "rubber-based pressure-sensitive adhesive layer (A)/acrylic pressure-sensitive adhesive layer (B)," and is obtained by integrating formation materials for the laminate including a formation material (a) for the rubber-based pressure-sensitive adhesive layer (A) and a formation material (b) for the acrylic pressure-sensitive adhesive layer (B) through co-extrusion molding.

In a preferred embodiment, the pressure-sensitive adhesive sheet of the present invention further includes a release layer (C) directly laminated on a side of the acrylic pressure-sensitive adhesive layer (B) opposite to the rubber-based pressure-sensitive adhesive layer (A).

In a preferred embodiment, the pressure-sensitive adhesive sheet of the present invention is a laminate including a laminated structure "rubber-based pressure-sensitive adhesive layer (A)/acrylic pressure-sensitive adhesive layer (B)/release layer (C)," and is obtained by integrating formation materials for the laminate including a formation material (a) for the rubber-based pressure-sensitive adhesive layer (A), a formation material (b) for the acrylic pressure-sensitive adhesive layer (B), and a formationmaterial (c) for the release layer (C) through co-extrusion molding.

### Advantageous Effects of Invention

According to the present invention, it is possible to provide the pressure-sensitive adhesive sheet formed of at least two layers, including a rubber-based pressure-sensitive adhesive layer (A) and an acrylic pressure-sensitive adhesive layer (B) that are directly laminated, in which the pressure-sensitive adhesive sheet has a large interlayer peel strength.

### Brief Description of Drawings

FIG. 1 is a schematic sectional view of a pressure-sensitive adhesive sheet according to a preferred embodiment of the present invention.
FIG. 2 is a schematic sectional view of a pressure-sensitive adhesive sheet according to another preferred embodiment of the present invention.

### Description of Embodiments

### <<<<A. Pressure-sensitive adhesive sheet>>>>

A pressure-sensitive adhesive sheet of the present invention is a pressure-sensitive adhesive sheet formed of at least two layers, including a rubber-based pressure-sensitive adhesive layer (A) and an acrylic pressure-sensitive adhesive layer (B) that are directly laminated. That is, the pressure-sensitive adhesive sheet of the present invention is a laminate including a laminated structure "rubber-based pressure-sensitive adhesive layer (A)/acrylic pressure-sensitive adhesive layer (B)." As used herein, the expression "rubber-based pressure-sensitive adhesive layer (A)/acrylic pressure-sensitive adhesive layer (B)" refers to a structure in which the rubber-based pressure-sensitive adhesive layer (A) and the acrylic pressure-sensitive adhesive layer (B) are directly laminated.

The pressure-sensitive adhesive sheet of the present invention may include a release layer (C) directly laminated on the side of the acrylic pressure-sensitive adhesive layer (B) opposite to the rubber-based pressure-sensitive adhesive layer (A). The pressure-sensitive adhesive sheet of the present invention in this case is a laminate including a laminated structure "rubber-based pressure-sensitive adhesive layer (A)/acrylic pressure-sensitive adhesive layer (B)/release layer (C)." As used herein, the expression "rubber-based pressure-sensitive adhesive layer (A)/acrylic pressure-sensitive adhesive layer (B)/release layer (C)" refers to a structure in which the rubber-based pressure-sensitive adhesive layer (A), the acrylic pressure-sensitive adhesive layer (B), and the release layer (C) are directly laminated. It should be noted that the rubber-based pressure-sensitive adhesive layer (A) may, as required, have a separator or the like temporarily attached thereto so as to be protected until the pressure-sensitive adhesive sheet is actually used.

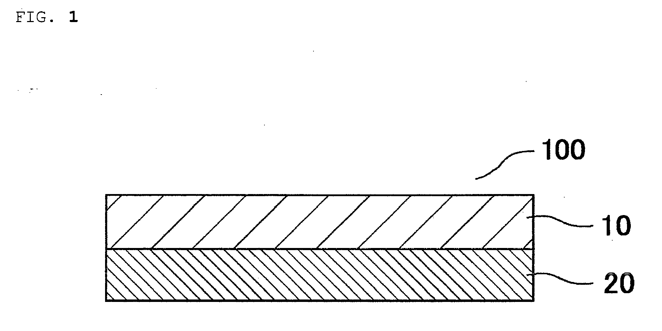

FIG. 1 is a schematic sectional view of a pressure-sensitive adhesive sheet according to a preferred embodiment of the present invention. In FIG. **1**, a pressure-sensitive adhesive sheet 100 includes a rubber-based pressure-sensitive adhesive layer (A) 10 and an acrylic pressure-sensitive adhesive layer (B) **20.**

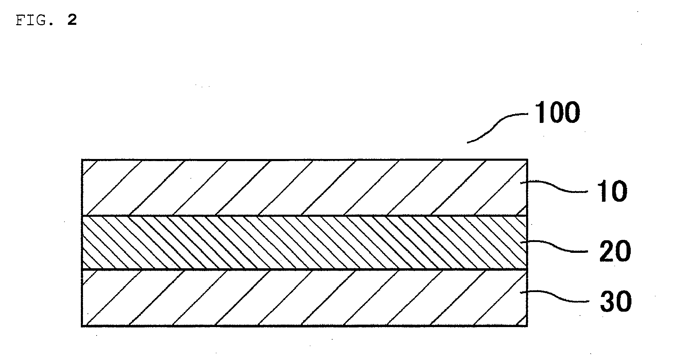

FIG. 2 is a schematic sectional view of a pressure-sensitive adhesive sheet according to another preferred embodiment of the present invention. In FIG. 2, the pressure-sensitive adhesive sheet 100 includes the rubber-based pressure-sensitive adhesive layer (A) 10, the acrylic pressure-sensitive adhesive layer (B) 20, and a release layer (C) 30.

The rubber-based pressure-sensitive adhesive layer (A) may be one layer alone, or may be a laminate of two or more layers.

The acrylic pressure-sensitive adhesive layer (B) may be one layer alone, or may be a laminate of two or more layers.

The release layer (C) may be one layer alone, or may be a laminate of two or more layers.

The pressure-sensitive adhesive sheet of the present invention may include any appropriate other layer to such an extent that an effect of the present invention is not impaired.

The thickness of the pressure-sensitive adhesive sheet of the present invention may be set to any appropriate thickness depending on applications. The thickness of the pressure-sensitive adhesive sheet of the present invention is preferably 2 µm to 500 µm, more preferably 5 µm to 300 µm, still more preferably 10 µm to 200 µm.

When the pressure-sensitive adhesive sheet of the present invention is a laminate including the laminated structure "rubber-based pressure-sensitive adhesive layer (A)/acrylic pressure-sensitive adhesive layer (B)," it is preferred that the pressure-sensitive adhesive sheet be integrally formed through co-extrusion molding.

When the pressure-sensitive adhesive sheet of the present invention is a laminate including the laminated structure "rubber-based pressure-sensitive adhesive layer (A)/acrylic pressure-sensitive adhesive layer (B)/release layer (C)," it is preferred that the pressure-sensitive adhesive sheet be integrally formed through co-extrusion molding.

The pressure-sensitive adhesive sheet of the present invention has an interlayer peel strength upon peeling of the acrylic pressure-sensitive adhesive layer (B) from the rubber-bases pressure-sensitive adhesive layer (A) under the conditions of a measurement temperature of 23°C, a tension speed of 0.3 m/min, and a peel angle of 180° of 2.0 N/20 mm or more, preferably 2.5 N/20 mm or more, more preferably 3. 0 N/20 mm or more, still more preferably 3.5 N/20 mm or more, particularly preferably 4.0 N/20 mm or more, most preferably 4.5 N/20 mm or more. The upper limit of such interlayer peel strength is not particularly limited, and the interlayer peel strength is desirably as large as possible. In actuality, however, the interlayer peel strength is preferably 100 N/20 mm or less. As long as such interlayer peel strength falls within the range, a clean peeling surface free of any adhesive residue can be formed at the time of peeling from an adherend (e.g., an optical part). It should be noted that details of the measurement of the interlayer peel strength are described later.

The pressure-sensitive adhesive sheet of the present invention has a pressure-sensitive adhesive strength of the rubber-based pressure-sensitive adhesive layer (A) for a polypropylene plate (PP plate) under the conditions of a measurement temperature of 23°C, a tension speed of 0.3 m/min, and a peel angle of 180° of preferably 3.5 N/20 mm or more, more preferably 4.0 N/20 mm or more, still more preferably 4.5 N/20 mm or more, still more preferably 5.0 N/20 mm or more, still more preferably 5.5 N/20 mm or more, particularly preferably 6. 0 N/20 mm or more, most preferably 6.5 N/20 mm or more. The upper limit of such pressure-sensitive adhesive strength is not particularly limited, and the pressure-sensitive adhesive strength is desirably as large as possible. In actuality, however, the pressure-sensitive adhesive strength is preferably 100 N/20 mm or less. In this regard, however, the preferred range of the pressure-sensitive adhesive strength of the pressure-sensitive adhesive sheet of the present invention may vary depending on its mode of use. It should be noted that the measurement of the pressure-sensitive adhesive strength can be performed in conformity with JIS-Z-0237 (2000) according to, for example, a measurement method for a pressure-sensitive adhesive strength described in Examples to be described later. It should be noted that the pressure-sensitive adhesive strength is preferably larger than the interlayer peel strength.

The pressure-sensitive adhesive sheet of the present invention has a pressure-sensitive adhesive strength of the acrylic pressure-sensitive adhesive layer (B) for an acrylonitrile-butadiene-styrene copolymer plate (ABS plate) under the conditions of a measurement temperature of 23°C, a tension speed of 0.3 m/min, and a peel angle of 180° of preferably 3.5 N/20 mm or more, more preferably 4.0 N/20 mm or more, still more preferably 4.5 N/20 mm or more, particularly preferably 5.0 N/20 mm or more. The upper limit of such pressure-sensitive adhesive strength is not particularly limited, and the pressure-sensitive adhesive strength is desirably as large as possible. In actuality, however, the pressure-sensitive adhesive strength is preferably 100 N/20 mm or less. In this regard, however, the preferred range of the pressure-sensitive adhesive strength of the pressure-sensitive adhesive sheet of the present invention may vary depending on its mode of use. It should be noted that the measurement of the pressure-sensitive adhesive strength can be performed in conformity with JIS-Z-0237 (2000) according to, for example, a measurement method for a pressure-sensitive adhesive strength described in Examples to be described later. It should be noted that the pressure-sensitive adhesive strength is preferably larger than the interlayer peel strength.

### <<A-1. Rubber-based pressure-sensitive adhesive layer (A) >>

Any appropriate thickness may be adopted as the thickness of the rubber-based pressure-sensitive adhesive layer (A) depending on applications. The thickness of the rubber-based pressure-sensitive adhesive layer (A) is preferably 1 µm to 200 µm, more preferably 2 µm to 100 µm, still more preferably 3 µm to 50 µm.

The rubber-based pressure-sensitive adhesive layer (A) may be one layer alone, or may be a laminate of two or more layers. When the rubber-based pressure-sensitive adhesive layer (A) is a laminate of two or more layers, the number of layers is preferably 2 to 5, more preferably 2 or 3. When the rubber-based pressure-sensitive adhesive layer (A) is one layer alone, the co-extrusion molding upon production of the pressure-sensitive adhesive sheet can be easy. When the rubber-based pressure-sensitive adhesive layer (A) is a laminate of two or more layers, functions can be shared among the respective layers.

The rubber-based pressure-sensitive adhesive layer (A) preferably contains at least one kind selected from an α-olefin-based thermoplastic elastomer and a styrene-based thermoplastic elastomer. Any appropriate α-olefin-based thermoplastic elastomer can be selected as the α-olefin-based thermoplastic elastomer. Any appropriate styrene-based thermoplastic elastomer can be selected as the styrene-based thermoplastic elastomer. The content of the at least one kind selected from the α-olefin-based thermoplastic elastomer and the styrene-based thermoplastic elastomer in the rubber-based pressure-sensitive adhesive layer (A) is preferably 40 wt% to 100 wt%, more preferably 50 wt% to 100 wt%, still more preferably 60 wt% to 100 wt%.

Any appropriate α-olefin-based elastomer may be adopted as the α-olefin-based thermoplastic elastomer as long as the elastomer can be formed into a film by melt extrusion. The term "α-olefin-based elastomer" refers to an elastomer obtained by using a monomer component containing at least not less than one kind of α-olefin. Such α-olefin-based elastomer is preferably, for example, an amorphous propylene-(1-butene) copolymer. Here, the term "amorphous" as used in this description refers to the following property: the copolymer does not have any clear melting point unlike a crystalline material. The α-olefin-based thermoplastic elastomers may be used alone or in combination.

The amorphous propylene-(1-butene) copolymer can be preferably obtained by copolymerizing propylene and 1-butene with a metallocene catalyst. The amorphous propylene-(1-butene) copolymer obtained by the copolymerization involving using the metallocene catalyst shows a narrow molecular weight distribution (of, for example, 2 or less). The use of the amorphous propylene-(1-butene) copolymer showing such narrow molecular weight distribution can prevent the bleeding of a low-molecular weight component.

The content of a constitutional unit derived from propylene in the amorphous propylene-(1-butene) copolymer is preferably 80 to 99 mol%, more preferably 85 to 99 mol%, still more preferably 90 to 99 mol%. As long as the content of the constitutional unit derived from propylene in the amorphous propylene-(1-butene) copolymer falls within such range, the rubber-based pressure-sensitive adhesive layer (A) excellent in balance between toughness and flexibility can be obtained, and hence the effect of the present invention can be expressed in an additionally effective manner.

The content of a constitutional unit derived from 1-butene in the amorphous propylene-(1-butene) copolymer is preferably 1 to 15 mol%, more preferably 1 to 10 mol%. As long as the content of the constitutional unit derived from 1-butene in the amorphous propylene-(1-butene)copolymer falls with in such range, the rubber-based pressure-sensitive adhesive layer (A) excellent in balance between toughness and flexibility can be obtained, and hence the effect of the present invention can be expressed in an additionally effective manner.

Any appropriate copolymerized structure may be adopted as the copolymerized structure of the amorphous propylene-(1-butene) copolymer. Examples of such copolymerized structure include a block copolymer and a random copolymer.

The weight-average molecular weight (Mw) of the amorphous propylene-(1-butene) copolymer is preferably 200,000 or more, more preferably 200,000 to 500,000, still more preferably 200, 000 to 300,000. As long as the weight-average molecular weight (Mw) of the amorphous propylene-(1-butene) copolymer falls within such range, the rubber-based pressure-sensitive adhesive layer (A) having an appropriate pressure-sensitive adhesive strength can be obtained, and hence the effect of the present invention can be expressed in an additionally effective manner.

When the rubber-based pressure-sensitive adhesive layer (A) contains the amorphous propylene-(1-butene) copolymer, the rubber-based pressure-sensitive adhesive layer (A) may further contain a crystalline polypropylene-based resin for adjusting the pressure-sensitive adhesive strength of the rubber-based pressure-sensitive adhesive layer (A). When the rubber-based pressure-sensitive adhesive layer (A) contains the crystalline polypropylene-based resin, the pressure-sensitive adhesive strength of the rubber-based pressure-sensitive adhesive layer (A) can be moderately reduced and its storage modulus can be increased. When the rubber-based pressure-sensitive adhesive layer (A) further contains the crystalline polypropylene-based resin, the content of the crystalline polypropylene-based resin in the rubber-based pressure-sensitive adhesive layer (A) may be set to any appropriate content depending on a desired pressure-sensitive adhesive strength and a desired storage modulus. The content of such crystalline polypropylene-based resin is preferably 0 wt% to 50 wt%, more preferably 0 wt% to 40 wt%, still more preferably 0 wt% to 30 wt% with respect to the total weight of the amorphous propylene-(1-butene) copolymer and the crystalline polypropylene-based resin.

Any appropriate styrene-based thermoplastic elastomer may be adopted as the styrene-based thermoplastic elastomer as long as the elastomer can be formed into a film by melt extrusion. The term "styrene-based thermoplastic elastomer" refers to an elastomer obtained by using a monomer component containing at least not less than one kind of styrene-based monomer. The styrene-based thermoplastic elastomers may be used alone or in combination.

Examples of the styrene-based thermoplastic elastomer include styrene-based block copolymers such as: styrene-based AB-type diblock copolymers such as a styrene-ethylene-butylene copolymer (SEB); styrene-based ABA-type triblock copolymers such as a styrene-butadiene-styrene copolymer (SBS), a hydrogenated product of SBS (styrene-ethylene-butylene-styrene copolymer (SEBS)), a styrene-isoprene-styrene copolymer (SIS), a hydrogenated product of SIS (styrene-ethylene-propylene-styrene copolymer (SEPS)), and a styrene-isobutylene-styrene copolymer (SIBS); styrene-based ABAB-type tetrablock copolymers such as styrene-butadiene-styrene-butadiene (SBSB); styrene-based ABABA-type pentablock copolymers such as styrene-butadiene-styrene-butadiene-styrene (SBSBS); and styrene-based multiblock copolymers having a larger number of AB repeating units than these copolymers. Further examples thereof include hydrogenated products each obtained by hydrogenating ethylenic double bonds of a styrene-based random copolymer such as a styrene-butadiene rubber (SBR).

The content of a styrene block structure in the styrene-based block copolymer is preferably 5 to 40 wt%, more preferably 7 to 30 wt%, still more preferably 9 to 20 wt%. When the content of the styrene block structure is less than 5 wt%, an adhesive residue due to an insufficient cohesive strength of the rubber-based pressure-sensitive adhesive layer (A) is liable to occur. When the content of the styrene block structure is more than 40 wt%, the rubber-based pressure-sensitive adhesive layer (A) becomes hard, and hence satisfactory adhesive property for a rough surface may not be obtained.

When the styrene-based block copolymer has an ethylene-butylene block structure, the content of a constitutional unit derived from butylene in the ethylene-butylene block structure is preferably 50 wt% or more, more preferably 60 wt% or more, still more preferably 70 wt% or more, particularly preferably 70 to 90 wt%. As long as the content of the constitutional unit derived from butylene falls within such range, a rubber-based pressure-sensitive adhesive layer (A) excellent in wettability and adhesive property, and capable of being favorably bonded even to a rough surface can be obtained.

The rubber-based pressure-sensitive adhesive layer (A) can include any appropriate other component as required. Examples of the other component include: a tackifier; a softening agent; an antioxidant; an olefin-based resin; a silicone-based resin; a liquid acrylic copolymer; a polyethylene imine; a fatty acid amide; a phosphoric acid ester; a hindered amine-based light stabilizer; a UV absorbing agent; a thermal stabilizer; a filler or pigment such as calcium oxide, magnesium oxide, silica, zinc oxide, or titanium oxide; and other additives. The kind, number, and amount of the other component that can be incorporated into the rubber-based pressure-sensitive adhesive layer (A) may be appropriately set depending on purposes. The amount of the other component is preferably 5 wt% or less, more preferably 1 wt% or less with respect to the entirety of the rubber-based pressure-sensitive adhesive layer (A).

The tackifier is effective in improving a pressure-sensitive adhesive strength. In addition, the tackifier can function as a compatibilizer because the tackifier is compatible with each of the rubber-based pressure-sensitive adhesive layer (A) and the acrylic pressure-sensitive adhesive layer (B). When the rubber-based pressure-sensitive adhesive layer (A) contains the tackifier, the content of the tackifier in the rubber-based pressure-sensitive adhesive layer (A) may be set to any appropriate content in consideration of the prevention of the occurrence of an adhesive residue due to a reduction in cohesive strength. The content of the tackifier in the rubber-based pressure-sensitive adhesive layer (A) is preferably 1 to 60 wt%, more preferably 3 to 50 wt%, still more preferably 4 to 45 wt%, particularly preferably 5 to 40 wt% with respect to the resin component of the rubber-based pressure-sensitive adhesive layer (A).

Examples of the tackifier include a hydrocarbon-based tackifier, a terpene-based tackifier, a rosin-based tackifier, a phenol-based tackifier, an epoxy-based tackifier, a polyamide-based tackifier, an elastomer-based tackifier, and a ketone-based tackifier. The tackifiers in the rubber-based pressure-sensitive adhesive layer (A) may be used alone or in combination.

Examples of the hydrocarbon-based tackifier include: an aliphatic hydrocarbon resin, an aromatic hydrocarbon resin (such as a xylene resin), an aliphatic cyclic hydrocarbon resin, an aliphatic/aromatic petroleum resin (such as a styrene-olefin-based copolymer), an aliphatic/alicyclic petroleum resin, a hydrogenated hydrocarbon resin, a coumarone-based resin, and a coumarone-indene-based resin.

Examples of the terpene-based tackifier include terpene-based resins such as an α-pinene polymer and a β-pinene polymer; and modified terpene-based resins (such as a terpene-phenol-based resin, a styrene-modified terpene-based resin, and a hydrogenated terpene-based resin) each obtained by modifying a terpene-based resin (e.g., phenol modification, aromatic modification, and hydrogenation modification).

Examples of the rosin-based tackifier include: unmodified rosins (raw rosins) such as a gum rosin and a wood rosin; modified rosins (such as a hydrogenated rosin, a disproportionated rosin, a polymerized rosin, and any other chemically modified rosin) each obtained by modifying an unmodified rosin through hydrogenation, disproportionation, polymerization, or the like; and other various rosin derivatives.

Examples of the phenol-based tackifier include resol-type and novolac-type alkylphenols.

The tackifier may be a product commercially available as a blended product with an olef in resin or a thermoplastic elastomer.

A softening agent is effective in improving a pressure-sensitive adhesive strength. When the rubber-based pressure-sensitive adhesive layer (A) contains the softening agent, any appropriate content may be adopted as the content of the softening agent in the rubber-based pressure-sensitive adhesive layer (A). The content of the softening agent in the rubber-based pressure-sensitive adhesive layer (A) is preferably 40 wt% or less, more preferably 20 wt% or less, still more preferably 10 wt% or less because the amount of an adhesive residue at the time of exposure to high temperatures or outdoors tends to increase when the content of the softening agent in the rubber-based pressure-sensitive adhesive layer (A) becomes excessively large.

Examples of the softening agent include a low-molecular-weight diene-based polymer, a polyisobutylene, a hydrogenated polyisoprene, a hydrogenated polybutadiene, and derivatives thereof. Examples of the derivatives include those each having an OH group or COOH group on one of, or each of both of, its terminals. Specific examples thereof include a hydrogenated polybutadiene diol, a hydrogenated polybutadiene monool, a hydrogenated polyisoprene diol, and a hydrogenated polyisoprene monool. A hydrogenated product of a diene-based polymer such as a hydrogenated polybutadiene or a hydrogenated polyisoprene, an olefin-based softening agent, or the like is preferred in order that a rise in pressure-sensitive adhesive strength may be additionally suppressed. Specific examples thereof include a "KURAPRENELIR-200"manufacturedbyKURARAYCO., LTD. The softening agents in the rubber-based pressure-sensitive adhesive layer (A) may be used alone or in combination.

The molecular weight of the softening agent may be set to any appropriate value. When the molecular weight of the softening agent is excessively small, the small molecular weight may cause contamination due to bleeding from the rubber-based pressure-sensitive adhesive layer (A). On the other hand, when the molecular weight of the softening agent is excessively large, an improving effect on the adhesive strength tends to be poor. Accordingly, the number-average molecular weight of the softening agent is preferably 5,000 to 100,000, more preferably 10,000 to 50,000.

### <<A-2. Acrylic pressure-sensitive adhesive layer (B) >>

The thickness of the acrylic pressure-sensitive adhesive layer (B) may be set to any appropriate thickness depending on applications. The thickness of the acrylic pressure-sensitive adhesive layer (B) is preferably 1 µm to 200 µm, more preferably 2 µm to 100 µm, still more preferably 3 µm to 50 µm. It should be noted that the acrylic pressure-sensitive adhesive layer (B) may be protected with a separator or the like temporarily attached thereto as required until put into practical use.

Any appropriate pressure-sensitive adhesive may be adopted as a pressure-sensitive adhesive in the acrylic pressure-sensitive adhesive layer (B) to such an extent that the effect of the present invention is not impaired. The pressure-sensitive adhesives constituting the acrylic pressure-sensitive adhesive layer (B) may be used alone or in combination.

The pressure-sensitive adhesive in the acrylic pressure-sensitive adhesive layer (B) is preferably, for example, an acrylic block copolymer containing an acrylic acid ester block structure (referred to as "Ac block") and a methacrylic acid ester block structure (referred to as "MAc block"). The acrylic pressure-sensitive adhesive layer (B) contains more preferably 50 wt% or more, still more preferably 70 wt% or more, particularly preferably 90 wt% or more of such acrylic block copolymer. Such acrylic block copolymers in the acrylic pressure-sensitive adhesive layer (B) may be contained alone or in combination.

The acrylic block copolymer preferably has a block structure in which an Ac block and an MAc block are alternately arranged. In addition, the total block number of the Ac blocks and the MAc blocks is preferably 3 or more, more preferably 3 to 5.

The Ac block is preferably a block structure derived from a monomer containing an acrylic acid ester as a main component. Specifically, the content of the acrylic acid ester in a monomer for constituting the Ac block is preferably 50 wt% or more, more preferably 70 wt% or more, still more preferably 90 wt% or more, particularly preferably 95 wt% or more, most preferably substantially 100 wt%.

The acrylic acid esters in the monomer for constituting the Ac block may be used alone or in combination.

When the monomer for constituting the Ac block contains a monomer except the acrylic acid ester (other monomer), any appropriate monomer may be adopted as the other monomer.

Examples of the acrylic acid ester in the monomer for constituting the Ac block include an aliphatic hydrocarbon ester of acrylic acid, an alicyclic hydrocarbon ester of acrylic acid, an aromatic hydrocarbon ester of acrylic acid, an ester of an alcohol having an ether bond and acrylic acid, an acrylic acid ester having a hydroxyl group, an acrylic acid ester having an amino group, an acrylic acid ester having an alkoxysilyl group, and an alkylene oxide adduct of acrylic acid.

Examples of the aliphatic hydrocarbon ester of acrylic acid include methyl acrylate, ethyl acrylate, n-propyl acrylate, isopropyl acrylate, n-butylacrylate, isobutyl acrylate, tert-butyl acrylate, n-pentyl acrylate, n-hexyl acrylate, n-heptyl acrylate, n-octyl acrylate, 2-ethylhexyl acrylate, nonyl acrylate, isononyl acrylate, decyl acrylate, dodecyl acrylate, and stearyl acrylate.

Examples of the alicyclic hydrocarbon ester of acrylic acid include cyclohexyl acrylate and isobornyl acrylate.

Examples of the aromatic hydrocarbon ester of acrylic acid include phenyl acrylate, benzyl acrylate, and toluyl acrylate.

Examples of the ester of an alcohol having an ether bond and acrylic acid include: alkoxyalkyl acrylates such as 2-methoxyethyl acrylate and 2-methoxybutyl acrylate; and epoxy group-containing acrylates such as glycidyl acrylate and methylglycidyl acrylate.

Examples of the acrylic acid ester having a hydroxyl group include hydroxyalkyl acrylates such as 2-hydroxyethyl acrylate, 2-hydroxypropyl acrylate, 3-hydroxypropyl acrylate, 2-hydroxybutyl acrylate, and 4-hydroxybutyl acrylate.

Examples of the acrylic acid ester having an amino group include 2-aminoethyl acrylate, N,N-dimethylaminoethyl acrylate, and N,N-dimethylaminopropyl acrylate.

Examples of the acrylic acid ester having an alkoxysilyl group include 3-acryloxypropyltrimethoxysilane, 3-acryloxypropyltriethoxysilane, 3-acryloxypropylmethyldimethoxysilane, and 3-acryloxypropylmethyldiethoxysilane.

Examples of the alkylene oxide adduct of acrylic acid include an ethylene oxide adduct represented by CH₂=CHCOO (CH₂CH₂O)ₙH (n represents, for example, 1 to 10).

The acrylic acid ester in the monomer for constituting the Ac block is preferably, for example, an aliphatic hydrocarbon ester of acrylic acid. The acrylic acid ester in the monomer for constituting the Ac block is more preferably an acrylic acid alkyl ester having an alkyl group having 1 to 20 carbon atoms, still more preferably an acrylic acid alkyl ester having an alkyl group having 1 to 14 carbon atoms. Particularly preferred examples of the acrylic acid ester in the monomer for constituting the Ac block include methyl acrylate, n-butyl acrylate, tert-butyl acrylate, and 2-ethylhexyl acrylate.

The MAc block is preferably a block structure derived from a monomer containing a methacrylic acid ester as a main component. Specifically, the content of the methacrylic acid ester in the monomer for constituting the MAc block is preferably 50 wt% or more, more preferably 70 wt% or more, still more preferably 90 wt% or more, particularly preferably 95 wt% or more, most preferably substantially 100 wt%.

The methacrylic acid esters in the monomer for constituting the MAc block may be used alone or in combination.

When the monomer for constituting the MAc block contains a monomer except the methacrylic acid ester (other monomer), any appropriate monomer may be adopted as the other monomer.

Examples of the methacrylic acid ester in the monomer for constituting the MAc block include an aliphatic hydrocarbon ester of methacrylic acid, an alicyclic hydrocarbon ester of methacrylic acid, an aromatic hydrocarbon ester of methacrylic acid, an ester of an alcohol containing an ether bond and methacrylic acid, a methacrylic acid ester having a hydroxyl group, a methacrylic acid ester having an amino group, a methacrylic acid ester having an alkoxysilyl group, and an alkylene oxide adduct of methacrylic acid.

Examples of the aliphatic hydrocarbon ester of methacrylic acid include methyl methacrylate, ethyl methacrylate, n-propyl methacrylate, isopropyl methacrylate, n-butyl methacrylate, isobutyl methacrylate, tert-butyl methacrylate, n-pentyl methacrylate, n-hexyl methacrylate, n-heptyl methacrylate, n-octyl methacrylate, 2-ethylhexyl methacrylate, nonyl methacrylate, isononyl methacrylate, decyl methacrylate, dodecyl methacrylate, and stearyl methacrylate.

Examples of the alicyclic hydrocarbon ester of methacrylic acid include cyclohexyl methacrylate and isobornyl methacrylate.

Examples of the aromatic hydrocarbon ester of methacrylic acid include phenyl methacrylate, benzyl methacrylate, and toluyl methacrylate.

Examples of the ester of an alcohol containing an ether bond and methacrylic acid include: alkoxyalkyl methacrylates such as 2-methoxyethyl methacrylate and 2-methoxybutyl methacrylate; and epoxy group-containing methacrylates such as glycidyl methacrylate and methylglycidyl methacrylate.

Examples of the methacrylic acid ester having a hydroxyl group include hydroxyalkyl methacrylates such as 2-hydroxyethyl methacrylate, 2-hydroxypropyl methacrylate, 3-hydroxypropyl methacrylate, 2-hydroxybutyl methacrylate, and 4-hydroxybutyl methacrylate.

Examples of the methacrylic acid ester having an amino group include 2-aminoethyl methacrylate, N,N-dimethylaminoethyl methacrylate, and N,N-dimethylaminopropyl methacrylate.

Examples of the methacrylic acid ester having an alkoxysilyl group include 3-methacryloxypropyltrimethoxysilane, 3-methacryloxypropyltriethoxysilane, 3-methacryloxypropylmethyldimethoxysilane, and 3-methacryloxypropylmethyldiethoxysilane.

Examples of the alkylene oxide adduct of methacrylic acid include an ethylene oxide adduct represented by CH₂=C(CH₃)COO(CH₂CH₂O)ₙH (n represents, for example, 1 to 10).

The methacrylic acid ester in the monomer for constituting the MAc block is preferably, for example, an aliphatic hydrocarbon ester of methacrylic acid. The methacrylic acid ester in the monomer for constituting the MAc block is more preferably a methacrylic acid alkyl ester having an alkyl group having 1 to 20 carbon atoms, still more preferably a methacrylic acid alkyl ester having an alkyl group having 1 to 14 carbon atoms. Particularly preferred examples of the methacrylic acid ester in the monomer for constituting the MAc block include methyl methacrylate and ethyl methacrylate.

The acrylic block copolymer preferably has a block structure in which the Ac block and the MAc block serving as an A block (hard segment) formed of a polymer of a hard structure excellent in cohesive strength and elasticity, and a B block (soft segment) formed of a polymer of a soft structure excellent in viscosity are alternately placed like, for example, an AB type, an ABA type, an ABAB type, or an ABABA type. The acrylic pressure-sensitive adhesive layer (B) containing the acrylic block copolymer of such structure as a main component can be a pressure-sensitive adhesive layer that has achieved a high level of compatibility between a cohesive strength or elasticity and viscosity. In addition, the acrylic pressure-sensitive adhesive layer (B) containing the acrylic block copolymer of such structure as a main component can be excellent in extrusion moldability. The acrylic block copolymer preferably has such a block structure that the A blocks (hard segments) are placed at both ends of a molecule (e.g., an ABA type or an ABABA type). The acrylic block copolymer having a block structure with such placement can be excellent in balance between cohesiveness and thermoplasticity.

When the acrylic block copolymer has the two or more A blocks (hard segments), the A blocks may be identical to or different from each other in monomer composition, molecular weight (polymerization degree), structure, and the like.

When the acrylic block copolymer has the two or more B blocks (soft segments), the B blocks may be identical to or different from each other in monomer composition, molecular weight (polymerization degree), structure, and the like.

The MAc block can be preferably adopted as the A block (hard segment).

The Ac block can be preferably adopted as the B block (soft segment).

A preferred form of the block structure of the acrylic block copolymer is, for example, a triblock structure of an "MAc block/Ac block/MAc block (ABA type)" structure. A more preferred form of the block structure of the acrylic block copolymer is, for example, the triblock structure in which the two MAc blocks have structures derived from substantially the same monomer.

With regard to a ratio between the Ac block and MAc block in the acrylic block copolymer in terms of a weight ratio, a weight ratio "Ac block/MAc block" is preferably 96/4 to 10/90, more preferably 93/7 to 20/80, still more preferably 90/10 to 30/70, particularly preferably 80/20 to 50/50. When the ratio of the Ac block is excessively large, the cohesive strength and elasticity of the copolymer may be insufficient. When the ratio of the MAc block is excessively large, its pressure-sensitive adhesive strength may be insufficient.

The weight-average molecular weight of the acrylic block copolymer is preferably 30,000 to 300,000, more preferably 35,000 to 250,000, still more preferably 40,000 to 200,000, particularly preferably 50,000 to 150,000. When the weight-average molecular weight of the acrylic block copolymer is less than 30,000, its pressure-sensitive adhesive characteristics and cohesiveness may be liable to reduce. When the weight-average molecular weight of the acrylic block copolymer exceeds 300,000, the thermoplasticity of the acrylic block copolymer is insufficient and hence it may be difficult to form the acrylic pressure-sensitive adhesive layer (B) by co-extrusion molding.

It should be noted that the weight-average molecular weight of the acrylic block copolymer refers to a value in terms of a polystyrene that can be determined by performing gel permeation chromatography (GPC) measurement on a sample prepared by dissolving the acrylic block copolymer in an appropriate solvent such as tetrahydrofuran. Specifically, the weight-average molecular weight of the acrylic block copolymer can be determined by performing the GPC measurement under conditions described in Examples to be described later.

The glass transition temperature (Tg) of the Ac block is preferably -80 to -10°C, more preferably -75 to -20°C, still more preferably -75 to -50°C.

The glass transition temperature (Tg) of the MAc block is preferably 40 to 240°C, more preferably 60 to 230°C, still more preferably 80 to 230°C.

Herein, the glass transition temperature (Tg) of the Ac block or the MAc block refers to a value determined from Fox's equation on the basis of the Tg of the homopolymer of each monomer constituting the block and the content (weight fraction) of the monomer. A value described in, for example, the "HANDBOOK OF PRESSURE-SENSITIVE ADHESIVE TECHNOLOGY" published by Nikkan Kogyo Shimbun Ltd. or the "Polymer Handbook" published by Wiley-Interscience may be adopted as the Tg of the homopolymer. For example, -70°C may be adopted as the Tg of 2-ethylhexyl acrylate, -54°C may be adopted as the Tg of n-butyl acrylate, and 105°C may be adopted as the Tg of methyl methacrylate.

The acrylic block copolymer can be obtained by copolymerization with any appropriate other monomer except an acrylic acid ester and a methacrylic acid ester. Examples of such other monomer include: cyano group-containing vinyl compounds such as acrylonitrile and methacrylonitrile; vinyl esters such as vinyl acetate and vinyl propionate; aromatic vinyl compounds such as styrene and α-methylstyrene; vinyl group-containing heterocyclic compounds such as N-vinylpyrrolidone; amide group-containing vinyl compounds such as acrylamide and methacrylamide; unsaturated monocarboxylic acids such as acrylic acid and methacrylic acid and salts (such as a sodium salt and a potassium salt) thereof; unsaturated dicarboxylic acids such as maleic acid and fumaric acid and salts (such as a sodium salt and a potassium salt) thereof; unsaturated dicarboxylic anhydrides such as maleic anhydride; and fluorinated alkyl (meth)acrylates such as methyl 2-(trifluoromethyl)(meth)acrylate, methyl 2-(perfluoroethyl)(meth)acrylate, ethyl 2-(trifluoromethyl)(meth)acrylate, ethyl 2-(perfluoroethyl)(meth)acrylate, ethyl 2-(perfluorohexyl)(meth)acrylate, ethyl 2-(perfluorodecyl)(meth)acrylate, ethyl 2-(perfluorohexadecyl)(meth)acrylate, and ethyl 2-(perfluorobutyl)(meth)acrylate. Such other monomers may be used alone or in combination.

The other monomer can be incorporated for, for example, adjusting the characteristics (such as pressure-sensitive adhesive characteristics and extrusion moldability) of the acrylic pressure-sensitive adhesive layer (B). A structure portion derived from the other monomer can be introduced in the form of a random copolymer, a block copolymer, a graft copolymer, or the like into, for example, the Ac block or the MAc block.

The content of the other monomer in the monomers for constituting the acrylic block copolymer is preferably 20 wt% or less, more preferably 10 wt% or less, still more preferably 5 wt% or less, particularly preferably substantially 0 wt% in the monomers for constituting the acrylic block copolymer. When the content of the other monomer in the monomers for constituting the acrylic block copolymer is excessively large, the transparency of the acrylic pressure-sensitive adhesive layer (B) may be impaired.

It is particularly preferred that the monomers constituting the acrylic block copolymer be substantially free of an acidic group-containing monomer as the other monomer. The acrylic pressure-sensitive adhesive layer (B) containing such acrylic block copolymer can show additionally low property to corrode an adherend. For example, in a pressure-sensitive adhesive sheet for an application where an adherend (such as a component part for a touch panel) having a transparent electrode made of indium tin oxide (ITO) or the like is attached, it is particularly preferred that the property of a pressure-sensitive adhesive layer to corrode the adherend be low. The acrylic block copolymer constituted of the monomers substantially free of the acidic group-containing monomer as the other monomer is preferred because of the following reason as well. An excessive increase in melt viscosity of the pressure-sensitive adhesive layer can be avoided.

The acrylic block copolymer can be produced by any appropriate method. The production method for the acrylic block copolymer is, for example, a production method involving utilizing a living polymerization method. According to the living polymerization method, an acrylic block copolymer excellent in thermoplasticity and having good extrusion moldability can be produced by excellent structure control unique to the living polymerization method while transparency and weatherability inherent in the acrylic block copolymer are maintained. In addition, according to the living polymerization method, the molecular weight distribution of the acrylic block copolymer can be controlled so as to be narrow. Accordingly, a reduction in cohesiveness (such as an adhesive residue upon peeling) resulting from the presence of a low-molecular weight component is suppressed and hence a pressure-sensitive adhesive sheet excellent in peelability can be provided.

In addition, the acrylic block copolymer can be obtained as a commercially available product. Examples of the acrylic block copolymer that can be obtained as a commercially available product include a series of products available under the trade name "LA Polymer" from KURARAY CO., LTD. (e.g., LA2140e and LA2250).

The acrylic pressure-sensitive adhesive layer (B) can contain any appropriate component except the acrylic block copolymer for the purpose of, for example, controlling its pressure-sensitive adhesive characteristics. Such appropriate component is, for example, a polymer except the acrylic block copolymer called an oligomer (having a weight-average molecular weight of, for example, 500 to 5,000). Examples of such oligomer include: an acrylic polymer that is a random copolymer of monomers containing an acrylic monomer (such as an acrylic acid ester or a methacrylic acid ester) as a main component and does not have any block structure; an olefin-based resin; and a silicone-based polymer. In addition, a polymer excellent in compatibility with the acrylic block copolymer is preferably selected as such appropriate component in order that the transparency of the acrylic pressure-sensitive adhesive layer (B) may not be impaired. The appropriate components may be used alone or in combination.

The content of the appropriate component is preferably 50 parts by weight or less, more preferably 10 parts by weight or less, still more preferably 5 parts by weight or less, particularly preferably substantially 0 parts by weight with respect to 100 parts by weight of the acrylic block copolymer.

The acrylic pressure-sensitive adhesive layer (B) can contain any appropriate other component as required. Examples of the other component include a tackifier, a filler, a coloring agent (such as a dye), an antioxidant, a chelate compound of a metal, and a cross-linking agent (such as a polyfunctional isocyanate, a polyfunctional amine, or a polyfunctional alcohol). The kind, number, and amount of the other component that can be incorporated into the acrylic pressure-sensitive adhesive layer (B) may be appropriately set depending on purposes. The amount of the other component is preferably 5 wt% or less, more preferably 1 wt% or less with respect to the entirety of the acrylic pressure-sensitive adhesive layer (B) from the viewpoint of utilizing the transparency of the acrylic block copolymer.

The tackifier is effective in improving a pressure-sensitive adhesive strength. In addition, the tackifier can function as a compatibilizer because the tackifier is compatible with each of the rubber-based pressure-sensitive adhesive layer (A) and the acrylic pressure-sensitive adhesive layer (B). When the acrylic pressure-sensitive adhesive layer (B) contains the tackifier, the content of the tackifier in the acrylic pressure-sensitive adhesive layer (B) may be set to any appropriate content in consideration of the prevention of the occurrence of an adhesive residue due to a reduction in cohesive strength. The content of the tackifier in the acrylic pressure-sensitive adhesive layer (B) is preferably 1 to 60 wt%, more preferably 3 to 50 wt%, still more preferably 4 to 45 wt%, particularly preferably 5 to 40 wt% with respect to the resin component of the acrylic pressure-sensitive adhesive layer (B).

Examples of the tackifier include a hydrocarbon-based tackifier, a terpene-based tackifier, a rosin-based tackifier, a phenol-based tackifier, an epoxy-based tackifier, a polyamide-based tackifier, an elastomer-based tackifier, and a ketone-based tackifier. The tackifiers in the first pressure-sensitive adhesive layer (B1) may be used alone or in combination.

Examples of the hydrocarbon-based tackifier include an aliphatic hydrocarbon resin, an aromatic hydrocarbon resin (such as a xylene resin), an aliphatic cyclic hydrocarbon resin, an aliphatic/aromatic petroleum resin (such as a styrene-olefin-based copolymer), an aliphatic/alicyclic petroleum resin, a hydrogenated hydrocarbon resin, a coumarone-based resin, and a coumarone-indene-based resin.

Examples of the terpene-based tackifier include: terpene-based resins such as an α-pinene polymer and a β-pinene polymer; and modified terpene-based resins (such as a terpene-phenol-based resin, a styrene-modified terpene-based resin, and a hydrogenated terpene-based resin) each obtained by modifying a terpene-based resin (e.g., phenol modification, aromatic modification, and hydrogenation modification).

Examples of the rosin-based tackifier include: unmodified rosins (raw rosin) such as a gum rosin and a wood rosin; modified rosins (such as a hydrogenated rosin, a disproportionated rosin, a polymerized rosin, and any other chemically modified rosin) each obtained by modifying an unmodified rosin through hydrogenation, disproportionation, polymerization, or the like; and other various rosin derivatives.

Examples of the phenol-based tackifier include resol-type and novolac-type alkylphenols.

The tackifier may be a product commercially available as a blended product with an olefin resin or a thermoplastic elastomer.

Examples of the filler include inorganic fillers such as talc, titanium oxide, calcium oxide, magnesium oxide, zinc oxide, titanium oxide, calcium carbonate, silica, clay, mica, barium sulfate, whisker, and magnesium hydroxide. The average particle diameter of the filler is preferably 0.1 µm to 10 µm.

### <<A-3. Release layer (C)>>

The release layer (C) in the present invention is a layer that may be directly laminated on the side of the acrylic pressure-sensitive adhesive layer (B) opposite to the rubber-based pressure-sensitive adhesive layer (A) in such a manner that the release layer (C) is peelable from the acrylic pressure-sensitive adhesive layer (B). The release layer (C) is typically not pressure-sensitive adhesive at 23°C. The release layer (C) is preferably a layer that can function as a release liner for the acrylic pressure-sensitive adhesive layer (B). For example, the release layer (C) is preferably capable of causing interfacial failure between itself and the acrylic pressure-sensitive adhesive layer (B). In addition, the release layer (C) is preferably capable of being continuously peeled from the acrylic pressure-sensitive adhesive layer (B) without being torn or broken during the peeling.

Any appropriate thickness maybe adopted as the thickness of the release layer (C) depending on applications. The thickness of the release layer (C) is preferably 10 µm to 300 µm, more preferably 20 µm to 250 µm, still more preferably 30 µm to 200 µm.

The release layer (C) may be only one layer, or may be a laminate of two or more layers. When the release layer (C) is a laminate of two or more layers, the number of layers is preferably 2 to 5, more preferably 2 or 3. When the release layer is only one layer, co-extrusion molding in the production of the pressure-sensitive adhesive sheet can be easy. When the release layer is a laminate of two or more layers, the respective layers can have separate functions. For example, when the release layer is a laminate of two layers, a layer that facilitates unwinding from a roll body may be adopted as a first release layer (for the rubber-based pressure-sensitive adhesive layer (A)), and a layer that is satisfactory in peelability from the acrylic pressure-sensitive adhesive layer (B) may be adopted as a second release layer (for the acrylic pressure-sensitive adhesive layer (B)).

The release layer (C) preferably contains a polyolefin-based resin. Anyappropriatepolyolefin-basedresinmay be adopted as the polyolefin-based resin as long as the resin can be formed into a sheet by melt extrusion.

At least the surface on the acrylic pressure-sensitive adhesive layer (B) side (i.e., peeling surface) of the release layer (C) is preferably constructed of a peeling surface formation material containing a polyolefin as a main component. The release layer (C) having such construction is likely to be excellent in peelability from the acrylic pressure-sensitive adhesive layer (B). Examples of the polyolefin include a homopolymer of an α-olefin, a copolymer of two or more kinds of α-olefins, a block polypropylene, a random polypropylene, and a copolymer of one kind or two or more kinds of α-olefins and any other vinyl monomer. As a form of the copolymer, there are given, for example, a block form and a random form.

Preferred examples of the polyolefin-based resin include a homopolymer of an α-olefin, a copolymer of two or more kinds of α-olefins, a block polypropylene, and a random polypropylene. More preferred specific examples of the polyolefin-based resin include a polyethylene (PE), a homopolypropylene (PP), a block polypropylene, and a random polypropylene.

The α-olefin is preferably an α-olefin having 2 to 12 carbon atoms. Examples of such α-olefin include ethylene, propylene, 1-butene, and 4-methyl-1-pentene.

Examples of the homopolymer of an α-olefin include a polyethylene (PE), a homopolypropylene (PP), a poly(1-butene), and a poly(4-methyl-1-pentene).

Examples of the polyethylene (PE) include a low-density polyethylene (LDPE), a linear low-density polyethylene (LLDPE), a medium-density polyethylene, and a high-density polyethylene (HDPE).

The structure of the homopolypropylene may be any one of isotactic, atactic, and syndiotactic structures.

Examples of the copolymer of two or more kinds of α-olefins include an ethylene/propylene copolymer, an ethylene/1-butene copolymer, an ethylene/propylene/1-butene copolymer, a copolymer of ethylene and an α-olefin having 5 to 12 carbon atoms, and a copolymer of propylene and an α-olefin having 5 to 12 carbon atoms.

Examples of the copolymer of one kind or two or more kinds of α-olefins and any other vinyl monomer include an ethylene/vinyl acetate copolymer, an ethylene/alkyl acrylate copolymer, an ethylene/alkyl methacrylate copolymer, and an ethylene-nonconjugated diene copolymer.

The release layer (C) may include only one kind of polyolefin-based resin, or may include two or more kinds of polyolefin-based resins. As a form including two or more kinds of polyolefin-based resins, there are given, for example, a blend and a copolymer.

As the polyolefin-based resin, a commercially available product may be used.

The release layer (C) may contain any appropriate additive as required. Examples of the additive that can be incorporated into the release layer (C) include a mold release agent, a UV absorbing agent, a thermal stabilizer, a filler, a lubricant, a colorant (such as a dye), an antioxidant, an anti-build-up agent, an anti-blocking agent, a foaming agent, and a polyethylene imine. The kind, number, and amount of the additive to be incorporated into the release layer (C) may be appropriately set depending on purposes.

Examples of the mold release agent include a fatty acid amide-based mold release agent, a silicone-based mold release agent, a fluorine-based mold release agent, and a long-chain alkyl-based mold release agent. In order to allow the formation of a release layer that is more excellent in balance between peelability and contamination property by bleeding out, a fatty acid amide-based mold release agent is preferred, and a saturated fatty acid bisamide is more preferred. Any appropriate content may be adopted as the content of the mold release agent. Typically, the content is preferably 0.01 wt% to 5 wt% with respect to a thermoplastic resin (preferably a polyolefin-based resin) in the release layer (C).

Examples of the UV absorbing agent include a benzotriazole-based compound, a benzophenone-based compound, and a benzoate-based compound. Any appropriate content may be adopted as the content of the UV absorbing agent as long as the UV absorbing agent does not bleed out at the time of the forming. Typically, the content is preferably 0.01 wt% to 5 wt% with respect to a thermoplastic resin (preferably a polyolefin-based resin) in the release layer (C).

Examples of the thermal stabilizer include a hindered amine-based compound, a phosphorus-based compound, and a cyanoacrylate-based compound. Any appropriate content may be adopted as the content of the thermal stabilizer as long as the thermal stabilizer does not bleed out at the time of the forming. Typically, the content is preferably 0.01 wt% to 5 wt% with respect to a thermoplastic resin (preferably a polyolefin-based resin) in the release layer (C).

Examples of the filler include inorganic fillers such as talc, titanium oxide, calcium oxide, magnesium oxide, zinc oxide, titanium oxide, calcium carbonate, silica, clay, mica, barium sulfate, whisker, and magnesium hydroxide. The average particle diameter of the filler is preferably 0.1 µm to 10 µm. The content of the filler is preferably 1 wt% to 200 wt% with respect to a thermoplastic resin (preferably a polyolefin-based resin) in the release layer (C).

### <<<<B. Production method for pressure-sensitive adhesive sheet>>>>

The pressure-sensitive adhesive sheet of the present invention is a pressure-sensitive adhesive sheet that is a laminate including the laminated structure "rubber-based pressure-sensitive adhesive layer (A)/acrylic pressure-sensitive adhesive layer (B)," and is obtained by integrating formation materials for the laminate including a formation material (a) for the rubber-based pressure-sensitive adhesive layer (A) and a formation material (b) for the acrylic pressure-sensitive adhesive layer (B) through co-extrusion molding.

In the pressure-sensitive adhesive sheet of the present invention, when the release layer (C) is directly laminated on the side of the acrylic pressure-sensitive adhesive layer (B) opposite to the rubber-based pressure-sensitive adhesive layer (A), the pressure-sensitive adhesive sheet of the present invention is a pressure-sensitive adhesive sheet that is a laminate including the laminated structure "rubber-based pressure-sensitive adhesive layer (A)/acrylic pressure-sensitive adhesive layer (B)/release layer (C)," and is obtained by integrating formation materials for the laminate including the formation material (a) for the rubber-based pressure-sensitive adhesive layer (A), the formation material (b) for the acrylic pressure-sensitive adhesive layer (B), and a formation material (c) for the release layer (C) through co-extrusion molding.

The co-extrusion molding can be performed by using an extruder and a co-extrusion die for the formation materials for the respective layers in conformity with, for example, an inflation method or a T-die method. The co-extrusion molding integrates the respective layers derived from the respective formation materials to provide the laminate.

In the production method for the pressure-sensitive adhesive sheet of the present invention, the laminate obtained by integrating the layers through the co-extrusion molding may be irradiated with an ionizing radiation. Specifically, for example, the resultant laminate may be irradiated with the ionizing radiation before being wound into a roll shape or in a state of being unwound again after having been wound into a roll shape. The irradiation with the ionizing radiation is preferably performed under an inert gas atmosphere such as nitrogen. Examples of the ionizing radiation include an X-ray, a γ-ray, UV light, a visible ray, and an electron beam. The electron beam is preferred as the ionizing radiation because of, for example, the following reasons. The ratio at which a reaction active species is produced upon irradiation with the electron beam is high and the depth to which the electron beam penetrates an object to be irradiated therewith is large. Various electron beam accelerators of, for example, a Cockroft-Walton type, a van de Graaff type, a resonance transformer type, an insulating core transformer type, a linear type, a dynamitron type, and a high-frequency type can each be used as an electron beam source. The ionizing radiation may be applied from one side of the laminate or may be applied from each of both of its sides. In terms of the simplification of the step, the irradiation with the ionizing radiation is preferably performed as described below. Before being wound into a roll shape, the laminate is introduced into an ionizing radiation irradiation apparatus where the laminate is irradiated with the ionizing radiation. The irradiation dose of the ionizing radiation is preferably 10 to 500 kGy, more preferably 10 to 400 kGy, still more preferably 10 to 300 kGy from the viewpoints of improving interlayer adhesiveness and maintaining the physical properties of the pressure-sensitive adhesive sheet. An acceleration voltage for the ionizing radiationmay be appropriately selected depending on the kind of a resin to be used in the pressure-sensitive adhesive sheet and the thickness of the pressure-sensitive adhesive sheet. The acceleration voltage for the ionizing radiation preferably falls within the range of 50 to 300 kV in ordinary cases. The irradiation with the ionizing radiation may be performed once or may be performed a plurality of times (preferably twice).

The pressure-sensitive adhesive sheet of the present invention may be appropriately stretched uniaxially, i.e., in its lengthwise direction (extrusion direction) or widthwise direction (direction perpendicular to the extrusion direction), or biaxially, i.e., in its lengthwise direction and widthwise direction. A stretching ratio in the lengthwise direction upon stretching is, for example, preferably 1.01 to 10 times, more preferably 1.01 to 5 times, still more preferably 1.01 to 3 times. A stretching ratio in the widthwise direction is, for example, preferably 1.01 to 8 times, more preferably 1.01 to 4 times, still more preferably 1.01 to 2.5 times. The stretching may be performed in one stage per axis, or may be performed in two or more stages depending on the use applications of the pressure-sensitive adhesive sheet. A stretching temperature upon stretching preferably falls within the range of (Tg-20°C) to (Tg+50°C) with respect to the glass transition temperature (Tg) of the polymer constituting the release layer (C) from the viewpoint of, for example, stretchability.

### Examples

Hereinafter, the present invention is described specifically by way of Examples. However, the present invention is by no means limited to Examples shown below. It should be noted that test and evaluation methods in Examples and the like are as described below. In addition, the term "part(s)" means "part(s) by weight."

### (1) Measurement of weight-average molecular weight

GPC measurement was performed under the following conditions. Measurement apparatus: manufactured by TOSOH CORPORATION, model "HLC-8120GPC"
Columns: manufactured by TOSOH CORPORATION, TSKgel SuperHZM-H/HZ4000+HZ3000+HZ2000 were used by being connected in series.
Column size: each column had an inner diameter of 6.0 mm and a length of 15.0 cm.
Column temperature: 40°C
Flow rate: 0.6 mL/min
Eluent: tetrahydrofuran
Sample injection amount: 20 µL
Detector: RI (differential refractive index detector)
Standard sample: polystyrene

### (2) Measurement of interlayer peel strength

Apolyethyleneterephthalate (PET) film (manufacturedbyToray Industries, Inc., trade name: "Lumirror S10") having a thickness of 25 µm was attached to the acrylic pressure-sensitive adhesive layer (B) surface side of a pressure-sensitive adhesive sheet through the intermediation of an acrylic double-coated adhesive sheet (manufactured by NITTO DENKO CORPORATION, trade name: "No. 5000NS"). Next, the rubber-based pressure-sensitive adhesive layer (A) surface side as the opposite surface was backed with an SUS plate through the intermediation of the same acrylic double-coated adhesive sheet as above (No. 5000NS), and the resultant was cut into a strip-shaped test piece having a length of 100 mm and a width of 20 mm.

Next, the PET film was peeled from one end of the test piece up to a position at 30 mm in the lengthwise direction together with the acrylic pressure-sensitive adhesive layer (B) of the pressure-sensitive adhesive sheet, or together with the acrylic double-coated adhesive sheet (No. 5000NS) on the acrylic pressure-sensitive adhesive layer (B) surface side when it was difficult to peel off the acrylic pressure-sensitive adhesive layer (B) owing to its satisfactory interlayer adhesiveness (a peeling interface in the case where the PET film was able to be peeled off together with the acrylic pressure-sensitive adhesive layer (B) was present between the rubber-based pressure-sensitive adhesive layer (A)/the acrylic pressure-sensitive adhesive layer (B), and a peeling interface in the case where the acrylic pressure-sensitive adhesive layer (B) was unable to be peeled off was present between the acrylic pressure-sensitive adhesive layer (B)/the acrylic double-coated adhesive sheet (No. 5000NS)). The test piece from which the PET film had been partially peeled off was grasped with a chuck of a tensile tester and the PET film was peeled off in the 180° direction at a tension speed of 300 mm/min to measure a peel strength needed for the peeling. When the measured peel strength is, for example, 2.0 N/20 mm or more, a peel strength upon peeling of the acrylic pressure-sensitive adhesive layer (B) from the rubber-based pressure-sensitive adhesive layer (A) is 2.0 N/20 mm or more, and a peel strength upon peeling of the adjacent pressure-sensitive adhesive layers, i.e., the rubber-based pressure-sensitive adhesive layer (A) and the acrylic pressure-sensitive adhesive layer (B) from each other is 2.0 N/20 mm or more.

### (3) Measurement of pressure-sensitive adhesive strength

### (3-1) Measurement of pressure-sensitive adhesive strength on rubber-based pressure-sensitive adhesive layer (A) side

A PET film (manufactured by Toray Industries, Inc. , trade name: "Lumirror S10") having a thickness of 25 µm was attached to the acrylic pressure-sensitive adhesive layer (B) surface side of a pressure-sensitive adhesive sheet through the intermediation of an acrylic double-coated adhesive sheet (manufactured by NITTO DENKO CORPORATION, trade name: "No. 5000NS"), and a strip-shaped test piece having a length of 100 mm and a width of 20 mm was cut out of the pressure-sensitive adhesive sheet and subjected to the measurement of a pressure-sensitive adhesive strength on the rubber-based pressure-sensitive adhesive layer side in conformity with JIS-Z-0237 (2000).

Specifically, a polypropylene (PP) plate (manufactured by Shin-Kobe Electric Machinery Co., Ltd., trade name: "KOBE POLYSHEET PP-N-AN") and an acrylonitrile-butadiene-styrene copolymer (ABS) plate (manufactured by Shin-Kobe Electric Machinery Co., Ltd., trade name: "KOBE POLYSHEET ABS-N-WN") were each used as an adherend. The rubber-based pressure-sensitive adhesive layer surface of the test piece was brought into pressure contact with the surface of the adherend by moving a 2-kg roller from one end to the other and back, and 30 minutes later, the test piece was peeled off in the 180° direction at a tension speed of 300 mm/min to measure the pressure-sensitive adhesive strength.

### (3-2) Measurement of pressure-sensitive adhesive strength on acrylic pressure-sensitive adhesive layer (B) side

A pressure-sensitive adhesive strength on the acrylic pressure-sensitive adhesive layer (B) side was measured in the same manner as in the measurement method for the pressure-sensitive adhesive strength on the rubber-based pressure-sensitive adhesive layer (A) side except that a PET film (manufactured by Toray Industries, Inc., trade name: "Lumirror S10") having a thickness of 25 µm was attached to the rubber-based pressure-sensitive adhesive layer surface side of the pressure-sensitive adhesive sheet through the intermediation of an acrylic double-coated adhesive sheet (manufactured by NITTO DENKO CORPORATION, trade name:"No. 5000NS").

### (Production Example 1)

### <Production of acrylic block copolymer Ac1>

The inside of a reaction vessel having a volume of 2 L and provided with a nitrogen-introducing tube, a temperature gauge, and a stirring machine was replaced with a nitrogen gas, and then 800 mL of toluene, 2.5 mL of N,N,N',N",N"-pentamethyldiethylenetriamine, 34 mL of a 0.6-mol/L solution of isobutyl bis(2,6-di-t-butyl-4-methylphenoxy)aluminum in toluene, and 3.5 mL of a 1.3-mol/L solution of sec-butyllithium in toluene were loaded into the vessel. 27 mL of methyl methacrylate (MMA) were added to the mixture and then the whole was subjected to a reaction at room temperature for 3 hours. Next, the reaction liquid was cooled to -15°C and then 160 mL of n-butyl acrylate (BA) were dropped to the reaction liquid over 7 hours. Subsequently, 27 mL of MMA were added to the reaction liquid and then its temperature was returned to room temperature, followed by stirring for 10 hours. The reaction liquid was poured into a large amount of methanol and then the deposited precipitate was recovered to provide an acrylic block copolymer having a polyMMA-polyBA-polyMMA triblock structure. The resultant acrylic block copolymer had an Mw (weight-average molecular weight) of 8.0×10⁴, and a mass ratio between the polyMMA blocks (total mass of the two blocks) and the polyBA block of 25/75. Hereinafter, the acrylic block copolymer is referred to as "Ac1."

### (Production Example 2)

### <Production of acrylic block copolymer Ac2>

The inside of a reaction vessel having a volume of 2 L and provided with a nitrogen-introducing tube, a temperature gauge, and a stirring machine was replaced with a nitrogen gas, and then 800 mL of toluene, 2.5 mL of N,N,N',N",N"-pentamethyldiethylenetriamine, 34 mL of a 0.6-mol/L solution of isobutyl bis(2,6-di-t-butyl-4-methylphenoxy)aluminum in toluene, and 3.5 mL of a 1.3-mol/L solution of sec-butyllithium in toluene were loaded into the vessel. 27 mL of MMA were added to the mixture and then the whole was subjected to a reaction at room temperature for 3 hours. Next, the reaction liquid was cooled to -15°C and then 225 mL of 2-ethylhexyl acrylate (2EHA) were dropped to the reaction liquid over 7 hours. Subsequently, 27 mL of MMA were added to the reaction liquid and then its temperature was returned to room temperature, followed by stirring for 10 hours. The reaction liquid was poured into a large amount of methanol and then the deposited precipitate was recovered to provide an acrylic block copolymer having a polyMMA-poly2EHA-polyMMA triblock structure. The resultant acrylic block copolymer had an Mw of 8.5×10⁴, and a mass ratio between the polyMMA blocks (total mass of the two blocks) and the poly2EHA block of 25/75. Hereinafter, the acrylic block copolymer is referred to as "Ac2."

### (Example 1)

An α-olefin-based pressure-sensitive adhesive (AO) (manufactured by Sumitomo Chemical Company, Limited, trade name: "Tafthren H5002") as a rubber-based pressure-sensitive adhesive layer formation material, and an acrylic block copolymer (manufactured by KURARAY CO., LTD., tradename: "LA Polymer LA2140e", Mw=8.0×10⁴) (the acrylic block copolymer is hereinafter referred to as "Ac3") as an acrylic pressure-sensitive adhesive layer formation material were fed into an extruder and subjected to melt extrusion from a T-die onto the peel-treated surface of a cover separator (manufactured by Mitsubishi Plastics, Inc., trade name: "Diafoil MRF38") to be formed into a sheet shape in which a rubber-based pressure-sensitive adhesive layer (thickness: 10 µm)/an acrylic pressure-sensitive adhesive layer (thickness: 10 µm) were laminated. Thus, a pressure-sensitive adhesive sheet (1) was obtained.

Table 1 shows the results of the evaluations of the pressure-sensitive adhesive sheet (1).

### (Example 2)

A pressure-sensitive adhesive sheet (2) was obtained in the same manner as in Example 1 except that the Ac1 (acrylic block copolymer having a polyMMA-polyBA-polyMMA triblock structure) was used as the acrylic pressure-sensitive adhesive layer formation material.

Table 1 shows the results of the evaluations of the pressure-sensitive adhesive sheet (2).

### (Example 3)

A pressure-sensitive adhesive sheet (3) was obtained in the same manner as in Example 1 except that the Ac2 (acrylic block copolymer having a polyMMA-poly2EHA-polyMMA triblock structure) was used as the acrylic pressure-sensitive adhesive layer formation material.

Table 1 shows the results of the evaluations of the pressure-sensitive adhesive sheet (3).

### (Example 4)

A pressure-sensitive adhesive sheet (4) was obtained in the same manner as in Example 1 except that a polystyrene-polyisobutylene-polystyrene block copolymer (SIBS) (manufactured by Kaneka Corporation, trade name: "SIBSTAR 072T") was used as the rubber-based pressure-sensitive adhesive layer formation material.

Table 1 shows the results of the evaluations of the pressure-sensitive adhesive sheet (4).

### (Example 5)

AO as a rubber-based pressure-sensitive adhesive layer formation material, Ac3 as an acrylic pressure-sensitive adhesive layer formation material, and a mixture obtained by adding a saturated fatty acid bisamide (manufactured by Nippon Kasei Chemical Company Limited, trade name: "SLIPAX B") as a mold release agent at a ratio of 0.5 wt% to low-density polyethylene (LDPE) (manufactured by TOSOH CORPORATION, trade name: "Petrothene 190") as a release layer were fed into an extruder and subjected to melt extrusion from a T-die to be formed into a sheet shape in which a rubber-based pressure-sensitive adhesive layer (thickness: 10 µm)/an acrylic pressure-sensitive adhesive layer (thickness: 10 µm)/arelease layer (thickness: 50 µm) were laminated. After that, the sheet was wound into a roll shape to provide a pressure-sensitive adhesive sheet (5).

Table 2 shows the results of the evaluations of the pressure-sensitive adhesive sheet (5).

### (Example 6)

A pressure-sensitive adhesive sheet (6) was obtained in the same manner as in Example 5 except that Ac1 was used as the acrylic pressure-sensitive adhesive layer formation material.

Table 2 shows the results of the evaluations of the pressure-sensitive adhesive sheet (6).

### (Example 7)

A pressure-sensitive adhesive sheet (7) was obtained in the same manner as in Example 5 except that Ac2 was used as the acrylic pressure-sensitive adhesive layer formation material.

Table 2 shows the results of the evaluations of the pressure-sensitive adhesive sheet (7).

### (Comparative Example 1)

AO as a rubber-based pressure-sensitive adhesive layer formation material was fed into an extruder and subjected to melt extrusion from a T-die onto the peel-treated surface of a cover separator (Diafoil MRF38) to be formed into a rubber-based pressure-sensitive adhesive layer (thickness: 10 µm) having a sheet shape. After that, a solution of Ac3 in toluene as an acrylic pressure-sensitive adhesive layer formation material was applied onto the rubber-based pressure-sensitive adhesive layer at an adhesive thickness of 10 µm to provide a pressure-sensitive adhesive sheet (C1).

Table 3 shows the results of the evaluations of the pressure-sensitive adhesive sheet (C1).

### (Comparative Example 2)

The rubber-based pressure-sensitive adhesive layer was formed into a sheet shape in the same manner as in Example 1 except that the sheet was formed only from the rubber-based pressure-sensitive adhesive layer without laminating the acrylic pressure-sensitive adhesive layer. After that, an aqueous solution of an emulsion of an ether sulfate-type anionic surfactant (manufactured by Kao Corporation, trade name: "LATEMUL E-118B") containing an acrylic random copolymer (copolymer using 95 wt% of BA and 5 wt% of AA as constituent monomers) (weight-average molecular weight: 800,000) (hereinafter, the emulsion of the acrylic random copolymer is referred to as "EmAc")) was applied as the acrylic pressure-sensitive adhesive layer formation material onto the rubber-based pressure-sensitive adhesive layer so as to have a thickness of 10 µm. Thus, a pressure-sensitive adhesive sheet (C2) was obtained.

Table 3 shows the results of the evaluations of the pressure-sensitive adhesive sheet (C2).

**[Table 1]**

| | | | (1) | (2) | (3) | (4) |
|---|---|---|---|---|---|---|
| Rubber-based pressure-sensitive adhesive layer (A) | | Material name | AO | AO | AO | SIBS |
| | | Thickness [µm] | 10 | 10 | 10 | 10 |
| Acrylic pressure-sensitive adhesive layer (B) | | Material name | Ac3 | Ac1 | Ac2 | Ac3 |
| | | Thickness [µm] | 10 | 10 | 10 | 10 |
| Interlayer peel strength | | [N/20 mm] | 7.8 | 7.4 | 8.1 | 7.7 |
| Rubber-based pressure-sensitive adhesive layer (A) side pressure-sensitive adhesive characteristics | Pressure-sensitive adhesive strength for PP plate | [N/20 mm] | 7.4 | 7.2 | 7.7 | 8.9 |
| | Pressure-sensitive adhesive strength for ABS plate | [N/20 mm] | 3.1 | 2.9 | 3.1 | 5.4 |
| Acrylic pressure-sensitive adhesive layer (B) side pressure-sensitive adhesive characteristics | Pressure-sensitive adhesive strength for PP plate | [N/20 mm] | 4.9 | 4.0 | 5.3 | 3.8 |
| | Pressure-sensitive adhesive strength for ABS plate | [N/20 mm] | 6.6 | 5.4 | 7.0 | 5.7 |

**[Table 2]**

| | | | (5) | (6) | (7) |
|---|---|---|---|---|---|
| Rubber-based pressure-sensitive adhesive layer (A) | | Material name | AO | AO | AO |
| | | Thickness [µm] | 10 | 10 | 10 |
| Acrylic pressure-sensitive adhesive layer (B) | | Material name | Ac3 | Ac1 | Ac2 |
| | | Thickness [µm] | 10 | 10 | 10 |
| Release layer (C) | | Material name | LDPE | LDPE | LDPE |
| | | Thickness [µm] | 50 | 50 | 50 |
| Interlayer peel strength | | [N/20 mm] | 7.1 | 6.8 | 7.5 |
| Rubber-based pressure-sensitive adhesive layer (A) side pressure-sensitive adhesive characteristics | Pressure-sensitive adhesive strength for PP plate | [N/20 mm] | 7.3 | 7.4 | 7.2 |
| | Pressure-sensitive adhesive strength for ABS plate | [N/20 mm] | 3.0 | 3.1 | 3.0 |
| Acrylic pressure-sensitive adhesive layer (B) side pressure-sensitive adhesive characteristics | Pressure-sensitive adhesive strength for PP plate | [N/20 mm] | 5.0 | 3.9 | 5.1 |
| | Pressure-sensitive adhesive strength for ABS plate | [N/20 mm] | 6.6 | 5.4 | 6.9 |

**[Table 3]**

| | | | (C1) | (C2) |
|---|---|---|---|---|
| Rubber-based pressure-sensitive adhesive layer (A) | | Material name | AO | AO |
| | | Thickness [µm] | 10 | 10 |
| Acrylic pressure-sensitive adhesive layer (B) | | Material name | Ac3 applied in solvent | EmAc |
| | | Thickness [µm] | 10 | 10 |
| Interlayer peel strength | | [N/20 mm] | 1.3 | 1.0 |
| Rubber-based pressure-sensitive adhesive layer (A) side pressure-sensitive adhesive characteristics | Pressure-sensitive adhesive strength for PP plate | [N/20 mm] | An adhesive residue occurs on the adherend | An adhesive residue occurs on the adherend |
| | Pressure-sensitive adhesive strength for ABS plate | [N/20 mm] | An adhesive residue occurs on the adherend | An adhesive residue occurs on the adherend |
| Acrylic pressure-sensitive adhesive layer (B) side pressure-sensitive adhesive characteristics | Pressure-sensitive adhesive strength for PP plate | [N/20 mm] | An adhesive residue occurs on the adherend | An adhesive residue occurs on the adherend |
| | Pressure-sensitive adhesive strength for ABS plate | [N/20 mm] | An adhesive residue occurs on the adherend | An adhesive residue occurs on the adherend |

As shown in Tables 1 to 3, it can be confirmed that the pressure-sensitive adhesive sheet of the present invention can express satisfactory interlayer peelability, and its rubber-based pressure-sensitive adhesive layer and acrylic pressure-sensitive adhesive layer can express satisfactory pressure-sensitive adhesive strengths for their respective appropriate adherends.

### Industrial Applicability

The pressure-sensitive adhesive sheet obtained in the present invention is preferably used in an optical member requiring visibility. In addition, the sheet is suitable for an application where an optical component such as a polarizing plate for a liquid crystal display panel, a wavelength plate, a retardation plate, an optical compensation film, a brightness enhancement film, a light diffusion sheet, or a reflective sheet is attached.

### Reference Signs List

- **100**: pressure-sensitive adhesive sheet
- **10**: rubber-based pressure-sensitive adhesive layer (A)
- **20**: acrylic pressure-sensitive adhesive layer (B)
- **30**: release layer (C)

## Claims

1. A pressure-sensitive adhesive sheet formed of at least two layers, comprising a rubber-based pressure-sensitive adhesive layer (A) and an acrylic pressure-sensitive adhesive layer (B) that are directly laminated,
wherein the pressure-sensitive adhesive sheet has an interlayer peel strength upon peeling of the acrylic pressure-sensitive adhesive layer (B) from the rubber-based pressure-sensitive adhesive layer (A) under conditions of a measurement temperature of 23°C, a tension speed of 0.3 m/min, and a peel angle of 180°C of 2.0 N/20 mm or more.

2. A pressure-sensitive adhesive sheet according to claim 1, wherein the rubber-based pressure-sensitive adhesive layer (A) contains at least one kind selected from an α-olefin-based thermoplastic elastomer and a styrene-based thermoplastic elastomer.

3. A pressure-sensitive adhesive sheet according to claim 1 or 2, wherein the acrylic pressure-sensitive adhesive layer (B) contains an acrylic block copolymer containing an acrylic acid ester block structure and a methacrylic acid ester block structure.

4. A pressure-sensitive adhesive sheet according to claim 3, wherein the acrylic block copolymer has a weight-average molecular weight of 30,000 to 300,000.

5. A pressure-sensitive adhesive sheet according to any one of claims 1 to 4, wherein:
the pressure-sensitive adhesive sheet is a laminate including a laminated structure "rubber-based pressure-sensitive adhesive layer (A)/acrylic pressure-sensitive adhesive layer (B);" and
the pressure-sensitive adhesive sheet is obtained by integrating formation materials for the laminate including a formation material (a) for the rubber-based pressure-sensitive adhesive layer (A) and a formation material (b) for the acrylic pressure-sensitive adhesive layer (B) through co-extrusion molding.

6. A pressure-sensitive adhesive sheet according to any one of claims 1 to 5, further comprising a release layer (C) directly laminated on a side of the acrylic pressure-sensitive adhesive layer (B) opposite to the rubber-based pressure-sensitive adhesive layer (A).

7. A pressure-sensitive adhesive sheet according to claim 6, wherein:
the pressure-sensitive adhesive sheet is a laminate including a laminated structure "rubber-based pressure-sensitive adhesive layer (A)/acrylic pressure-sensitive adhesive layer (B)/release layer (C);" and
the pressure-sensitive adhesive sheet is obtained by integrating formation materials for the laminate including a formation material (a) for the rubber-based pressure-sensitive adhesive layer (A), a formation material (b) for the acrylic pressure-sensitive adhesive layer (B), and a formation material (c) for the release layer (C) through co-extrusion molding.
